# EUROPEAN PATENT SPECIFICATION

(11) **EP 4 156 565 B1**
(45) Date of publication and mention of the grant of the patent: **23.04.2025**
(21) Application number: 21863257.8
(22) Date of filing: 15.05.2021
(51) Int. Cl.: G06F 12/126, G06F 12/0804, G06F 12/0813, G06F 12/084, G06F 12/0846, G06F 12/02, G06F 12/0806

(54) **METHOD AND APPARATUS FOR SENDING FLUSH MESSAGE**
VERFAHREN UND VORRICHTUNG ZUM SENDEN EINER SPÜLNACHRICHT
PROCÉDÉ ET APPAREIL D'ENVOI DE MESSAGE DE PURGE

(30) Priority: 07.09.2020 CN 202010930707; 28.09.2020 CN 202011040732
(43) Date of publication of application: 29.03.2023
(73) Proprietor: Huawei Technologies Co., Ltd., Longgang District, Shenzhen, Guangdong 518129 (CN)
(72) Inventor: PAN, Wei, Shenzhen, Guangdong 518129 (CN); WU, Fengguang, Shenzhen, Guangdong 518129 (CN)
(74) Representative: Grünecker Patent- und Rechtsanwälte PartG mbB
(86) International application number: PCT/CN2021/093977
(87) International publication number: WO 2022/048187

(56) References cited:
- EP-A1- 3 588 306
- EP-B1- 1 605 360
- WO-A1-2017/117734
- CN-A- 1 268 695
- CN-A- 101 617 298
- CN-A- 110 209 601
- US-A1- 2003 009 639
- US-A1- 2018 143 903
- US-A1- 2019 317 895

## Description

### TECHNICAL FIELD

Embodiments of this application relate to the computer field, and in particular, to a flush packet sending method, a cache flushing method, a processor and a computing device.

### BACKGROUND

EP 1605 360 B1 discloses a memory cache control arrangement and a method of performing a coherency operation therefor. A coherency operation which may be a flush operation is initiated by a receive processor receiving an address group indication from a processor. The address group can consist in a continuous block of memory locations starting at a start address and ending at an end address, or the address group can correspond to other groups of addresses including disjoint address areas of the main memory.
Currently, when flushing (flush) data in a level 3 cache, a processor core may flush one cache line (cache line) each time. If the processor core flushes a plurality of cache lines, because the processor core cannot send flush packets in a concurrent manner, flush time is excessively long, and many processor resources are consumed. For example, it is assumed that a size of one page (page size) of a main memory is 4 kilobytes (kilobyte, KB), and a size of one cache line is 64 bytes (byte, B). In this case, one page includes 64 64B cache lines. When flushing data of one page in the main memory, the processor core needs to execute 64 consecutive flush instructions, and send 64 consecutive flush packets to the level 3 cache. In addition, the processor core alternatively provides an instruction for flushing cache lines in all level 3 caches at the same time. However, flushing the cache lines in all the level 3 caches may result in flushing of data that is required by another processor core. This affects performance of another process. Therefore, when the processor core flushes the cache lines in the level 3 cache, how to improve cache line flushing efficiency and reduce resources occupied by the processor core is an urgent problem that needs to be resolved.

### SUMMARY

This application provides a flush packet sending method, a cache flushing method, a processor and a computing device, to resolve a problem of how to improve cache line flushing efficiency and reduce occupied processor memory resources when a processor core flushes cache lines in a level 3 cache.

According to a first aspect, this application provides a flush packet sending method according to claim 1.

Compared with a solution in which the request device sends one flush packet to flush one cache line each time in the conventional technology, in the flush packet sending method provided in this embodiment, the request device sends one flush packet to flush the at least two cache lines. When a same quantity of cache lines are flushed, sending the flush packet in a broadcast manner reduces a quantity of flush packet sending times, so that original serial processing of a flush task is changed into parallel processing. This improves flushing efficiency, and effectively reduces internal resources of a processor that are occupied for flushing the cache lines.

Compared with a solution in which the request device flushes cache lines in all level 3 caches in the conventional technology, in the flush packet sending method provided in this embodiment, the flush packet sent by the request device may indicate to flush any quantity of cache lines. This avoids flushing data that is being used by another core or device, avoids affecting performance of another process, and improves accuracy of flushing a cache line.

In a possible implementation, the request device flushes a cache line in a cache at a page size granularity. The flush packet may indicate to flush all consecutive cache lines in a page, so that one or more caches flush, based on an indication of the flush packet, cache lines included in one page.

For example, the information about the physical address in the segment of continuous physical address space includes a start physical address of a page, the flush packet further includes a page type, and the page type is used to describe a size of the page.

For another example, the information about the physical address in the segment of continuous physical address space includes a start physical address of a page and an end physical address of the page.

For another example, the information about the physical address in the segment of continuous physical address space includes a physical address of a cache line in at least one page, the flush packet further includes a page type of each page, and the page type is used to describe a size of the page.

In another possible implementation, the request device flushes a cache line in a cache at a granularity of any quantity of cache lines. The flush packet may indicate to flush consecutive cache lines in one page or consecutive cache lines in a plurality of pages. Therefore, one or more caches flush the consecutive cache lines in the one page or the consecutive cache lines in the plurality of pages based on an indication of the flush packet.

For another example, the information about the physical address in the segment of continuous physical address space includes a physical address of one cache line and a quantity of cache lines.

For another example, the information about the physical address in the segment of continuous physical address space includes a physical address and an immediate, and the immediate indicates a quantity of low-order bits in the physical address.

According to a second aspect, this application provides a cache flushing method according to claim 4.

Compared with a solution in which the cache flushes one cache line each time in the conventional technology, in the cache flushing method provided in this embodiment, any quantity of cache lines are flushed according to a flush instruction. Therefore, original serial processing of a flush task is changed into parallel processing. This improves flushing efficiency, and effectively reduces internal resources of a processor that are occupied for flushing the cache lines.

Compared with a solution in which the cache flushes cache lines in all level 3 caches in the conventional technology, in the cache flushing method provided in this embodiment, any quantity of cache lines are flushed according to a flush instruction. This avoids flushing data that is being used by another core or device, avoids affecting performance of another process, and improves accuracy of flushing a cache line.

For example, the information about the physical address in the segment of continuous physical address space includes a start physical address of a page, the flush packet further includes a page type, and the page type is used to describe a size of the page.

For another example, the information about the physical address in the segment of continuous physical address space includes a start physical address of a page and an end physical address of the page.

For another example, the information about the physical address in the segment of continuous physical address space includes a physical address of a cache line in at least one page, the flush packet further includes a page type of each page, and the page type is used to describe a size of the page.

For another example, the information about the physical address in the segment of continuous physical address space includes a physical address of one cache line and a quantity of cache lines.

For another example, the information about the physical address in the segment of continuous physical address space includes a physical address and an immediate, and the immediate indicates a quantity of low-order bits in the physical address.

All cache lines flushed based on the flush packet are stored in a set of caches, the set of caches includes at least one cache, and the cache is any cache in the set of caches. Optionally, the cache included in the set of caches belongs to one or more non-uniform memory access (non-uniform memory access, NUMA) nodes in a NUMA system.

According to a third aspect, this application provides a processor according to claim 6.

In a possible implementation, the processor further includes a ring bus, an external device management module, and a memory manager. The processor core, the cache, the external device management module, and the memory manager are connected by using the ring bus.

In a possible implementation, the processor further includes a mesh bus, an external device management module, and a memory manager. The processor core, the cache, the external device management module, and the memory manager are connected by using the mesh bus.

Embodiments include the features defined in the dependent claims.

It should be understood that descriptions of technical features, technical solutions, beneficial effects, or similar words in this application do not imply that all features and advantages can be implemented in any individual embodiment. On the contrary, it may be understood that descriptions of the features or the beneficial effects mean that at least one embodiment includes a specific technical feature, technical solution, or beneficial effect. Therefore, the descriptions of the technical features, the technical solutions, or the beneficial effects in this specification may not necessarily belong to one embodiment. Further, the technical features, the technical solutions, and the beneficial effects described in the embodiments may be combined in any proper manner. A person skilled in the art understands that an embodiment may be implemented without one or more specific technical features, technical solutions, or beneficial effects in a specific embodiment. In other embodiments, additional technical features and beneficial effects may be further identified in a specific embodiment that does not reflect all the embodiments.

### BRIEF DESCRIPTION OF DRAWINGS

FIG. 1 is a schematic diagram of a composition of a computing device according to an embodiment of this application;
FIG. 2 is a flowchart of a flush packet sending and cache flushing method according to an embodiment of this application;
FIG. 3(a) and FIG. 3(b) are a schematic diagram of a composition of a continuous physical address space according to an embodiment of this application;
FIG. 4(a) and FIG. 4(b) are a schematic diagram of a cache line to be flushed according to an embodiment of this application;
FIG. 5 is a schematic diagram of a cache line to be flushed according to an embodiment of this application;
FIG. 6 is a schematic diagram of a cache line to be flushed according to an embodiment of this application;
FIG. 7(a) and FIG. 7(b) are a schematic diagram of a cache line to be flushed according to an embodiment of this application;
FIG. 8 is a schematic diagram of a structure of a cache line according to an embodiment of this application;
FIG. 9 is a schematic diagram of a composition of a flush packet sending apparatus according to an embodiment of this application;
FIG. 10 is a schematic diagram of a composition of a cache flushing apparatus according to an embodiment of this application;
FIG. 11 is a schematic diagram of a composition of a computing device according to an embodiment of this application; and
FIG. 12A and FIG. 12B are a schematic diagram of a composition of a computing device according to an embodiment of this application.

### DESCRIPTION OF EMBODIMENTS

In the specification, claims, and accompanying drawings of this application, terms "first", "second", "third", and the like are intended to distinguish between different objects, but not to limit a specific order.

In the embodiments of this application, the word such as "example" or "for example" is used to represent giving an example, an illustration, or a description. Any embodiment or design solution described as "example" or "for example" in the embodiments of this application should not be explained as being more preferred or having more advantages than another embodiment or design solution. Exactly, use of the word such as "example" or "for example" is intended to present a related concept in a specific manner.

The following describes implementations of the embodiments of this application in detail with reference to the accompanying drawings.

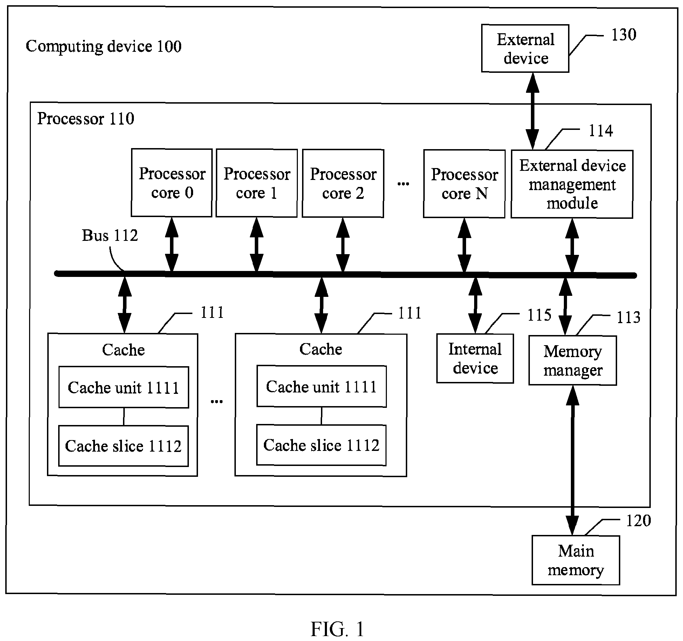

FIG. 1 is a schematic diagram of a composition of a computing device according to an embodiment of this application. As shown in FIG. 1, the computing device 100 includes a processor 110, a main memory 120, and an external device (external device) 130.

The following describes each component of the computing device 100 in detail with reference to FIG. 1.

The processor 110 is a control center of the computing device 100. Usually, the processor 110 is a central processing unit (central processing unit, CPU), and includes one processor core (core) or a plurality of processor cores. For example, the processor 110 shown in FIG. 1 includes N processor cores.

In the hierarchy of a computer storage system, a memory closer to the CPU has a higher read/write speed and a smaller memory capacity. Memories are classified into a register, a cache (cache), a main memory, and a magnetic disk in a sequence of distances to the CPU from near to far. The cache is a high-speed and small-capacity memory located between the CPU and the main memory. Caches include a level 1 cache (L1 cache), a level 2 cache (L2 cache), and a level 3 cache (L3 cache). Usually, a level 1 cache is configured inside a processor core. A level 2 cache may be configured inside or outside a processor core. The level 1 cache and the level 2 cache are usually exclusive (exclusive) to the processor cores in which the level 1 cache and the level 2 cache are located. A level 3 cache is usually configured outside a processor core, and is shared (shared) by a plurality of processor cores. Usually, a processor may include a plurality of level 3 caches. For example, the processor 110 shown in FIG. 1 includes a plurality of caches 111. The caches 111 are level 3 caches in the processor 110. The cache 111 is configured to store instructions or data that may be accessed by the processor core in the processor 110 a plurality of times. This improves a data processing speed of the processor, and prevents the processor from frequently accessing the main memory.

The cache 111 includes a cache unit (cache unit) 1111, and the cache unit 1111 is connected to a cache slice (slice) 1112. A cache line (cache line) is a minimum cache unit in the cache slice 1112. A cache line size (cache line size) may be 32 bytes (byte, B), 64 bytes, 128 bytes, 256 bytes, or the like. It is assumed that a storage capacity of the cache slice 1112 is 512 bytes, and a cache line size is 64 bytes. In this case, the storage capacity of the cache slice 1112 is divided into eight cache lines. The processor 110 is connected to the main memory 120 by using a memory controller (memory controller, MC) 113.

The cache unit 1111 is configured to manage the cache line in the cache slice 1112 according to an instruction of the processor core. For example, the cache unit 1111 determines, according to a cache line read instruction of the processor core and a status of the cache line in the cache slice 1112, whether to obtain a new cache line from the main memory 120 or feed back an existing cache line to the processor core. For another example, the cache unit 1111 flushes the cache line in the cache slice 1112 according to an instruction of the processor core. If the cache line in the cache slice 1112 is in a modified state (modified), the cache unit 1111 may write the cache line in the cache slice 1112 back to the main memory 120 or directly discard the cache line in the cache slice 1112 according to different types of flush instructions. If the cache line in the cache slice 1112 is in an unmodified state, the cache unit 1111 may discard the cache line in the cache slice 1112. For example, the unmodified state includes an exclusive state (exclusive, E), a shared state (shared, S), or an invalid state (invalid, I). The exclusive state means that data in the cache line is consistent with content of a corresponding cache line in the main memory, but the cache line is stored in only one cache in one NUMA domain. The shared state means that data in the cache line is consistent with content of a corresponding cache line in the main memory, but the cache line may be stored in one cache in a plurality of NUMA domains. The invalid state means that the cache line is not cached in the cache slice 1112. In this embodiment, flushing a cache line may alternatively be described as refreshing a cache line.

The processor core is connected to the caches 111 by using a bus 112, and accesses the caches 111 by using the bus 112. The bus 112 may be an industry standard architecture (industry standard architecture, ISA) bus, a peripheral component interconnect (peripheral component interconnect, PCI) bus, an extended industry standard architecture (extended industry standard architecture, EISA) bus, a private bus standard of a non-standard architecture, or the like. The bus may be classified into an address bus, a data bus, a control bus, and the like. For ease of representation, only one thick line is used to represent the bus in FIG. 1, but this does not mean that there is only one bus or only one type of bus.

The processor 110 may execute various functions of the computing device 100 by running or executing a software program stored in the main memory 120 and invoking data stored in the main memory 120.

In this embodiment, the processor core sends a flush packet to a set of caches 111 in a broadcast manner. It may be understood that all caches within a broadcast address range can receive the flush packet. Physical address information carried in the flush packet is used to indicate to flush at least two cache lines. The set of caches includes at least one cache. Further, the processor core receives flush completion packets from all caches in the set of caches.

Compared with a solution in which a processor core sends one flush packet to flush one cache line each time in the conventional technology, in a flush packet sending method provided in the embodiments, the processor core sends one flush packet to flush at least two cache lines. When a same quantity of cache lines are flushed, sending the flush packet in a broadcast manner reduces a quantity of flush packet sending times, so that serial processing of a flush task is changed into parallel processing. This improves flushing efficiency, and effectively reduces internal resources of a processor that are occupied for flushing the cache lines.

Compared with a solution in which a processor core flushes cache lines in all level 3 caches in the conventional technology, in a flush packet sending method provided in the embodiments, the flush packet sent by the processor core may indicate to flush any quantity of cache lines. This avoids flushing data that is being used by another processor core or device, avoids affecting performance of another process, and improves accuracy of flushing a cache line.

The cache 111 receives the flush packet, flushes a cache line that is in the at least two cache lines indicated by the flush packet and that is within a management scope of the cache, and sends a flush completion packet to the processor core. It should be noted that if the cache line indicated by the flush packet is not within the management scope of the cache 111, the cache 111 also sends a flush completion packet to the processor core.

In a physical form, the cache 111 may be a random access memory (random access memory, RAM), a static random access memory (static random access memory, SRAM), a dynamic random access memory (dynamic RAM, DRAM), or another type of storage device that can store information and instructions.

In a logical form, the cache 111 may be a level 3 cache, a level 1 cache, a level 2 cache, or a cache device of any level as long as the cache device is a distributed cache device, to be specific, cache lines are stored in a plurality of cache devices of a same level in a distributed manner.

The main memory 120 may be a read-only memory (read-only memory, ROM), another type of static storage device that can store static information and instructions, a random access memory (random access memory, RAM), another type of dynamic storage device that can store information and instructions, an electrically erasable programmable read-only memory (electrically erasable programmable read-only memory, EEPROM), or the like. The main memory 120 is further configured to store a program related to the embodiments.

The processor 110 may further include an external device management module 114. The external device management module 114 is separately connected to the bus 112 and the external device 130. The external device 130 may be an application-specific integrated circuit (application-specific integrated circuit, ASIC), for example, a microprocessor (digital signal processor, DSP), one or more field programmable gate arrays (field programmable gate array, FPGA), a graphics processing unit (graphics processing unit, GPU), or a neural-network processing unit (neural-network processing unit, NPU). The external device 130 may also send a flush packet to a set of caches in a broadcast manner. For a specific explanation of sending the flush packet by the external device 130, refer to the foregoing description of sending the flush packet by the processor core.

The processor 110 may further include an internal device 115. The internal device 115 includes a logical Internet protocol (Internet protocol, IP) unit connected to the bus 112 and a logical management function module. For example, the logical management function module includes but is not limited to: an interrupt management module, a NUMA management module (or a NUMA node manager), an internally integrated input and output (input and output, IO) module, an internal encryption and decryption module, an internal direct memory access (direct memory access, DMA) module, and the like. The internal device 115 may also send a flush packet to a set of caches in a broadcast manner as required. It should be noted that each module or device connected to the bus may send a flush packet to a set of caches in a broadcast manner.

A structure of the device shown in FIG. 1 does not constitute a limitation on the computing device. The computing device may include more or fewer components than those shown in the figure, or combine some components, or have a different component arrangement.

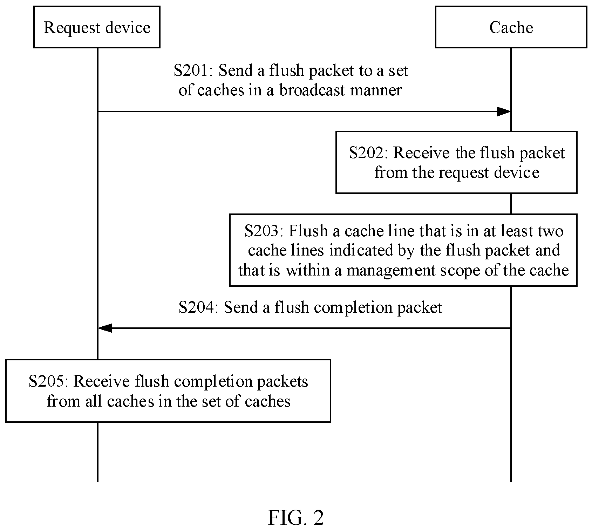

The following describes a flush packet sending and cache flushing method in the embodiments in detail with reference to FIG. 2.

S201: A request device sends a flush packet to a set of caches in a broadcast manner.

The request device includes but is not limited to the following devices: a processor core, an external device, and another device connected to a bus, for example, a processor core 0, a processor core 1, or the external device 130 shown in FIG. 1. The another device connected to the bus includes the internal device 115 shown in FIG. 1.

After obtaining a flush instruction, the device (for example, a processor core) connected to the bus generates a flush packet according to the flush instruction, and sends the flush packet to the set of caches in a broadcast manner.

If the request device is an external device, a processing module in the external device controls, by configuring a register of the external device, the external device to send a flush instruction or a flush packet to an external device management module. After obtaining the flush instruction or the flush packet, the external device management module coverts the flush instruction or the flush packet into a bus-type flush packet, and sends the flush packet to the set of caches in a broadcast manner.

It should be understood that the broadcast manner is a one-to-many manner. The request device sends the flush packet, where the flush packet includes a broadcast address, and all caches within a broadcast address range can receive the flush packet. To be specific, a quantity of flush packets sent by the request device is less than a quantity of caches that receive the flush packets. For example, the request device sends one flush packet to a set of caches in a broadcast manner, and each cache in the set of caches can receive the flush packet from the request device. For another example, the request device sends two flush packets to a set of caches in a broadcast manner, and each cache in the set of caches can receive the flush packets from the request device. The set of caches includes at least one cache.

Optionally, any processor core in a processor may classify caches in the processor into a plurality of NUMA nodes according to a hash algorithm. In this embodiment, caches included in the set of caches may belong to one or more NUMA nodes in a NUMA system. For example, the plurality of caches 111 in FIG. 1 may belong to one or more NUMA nodes. The processor core or the external device 130 may send a flush packet to the caches 111 in the one or more NUMA nodes.

In some embodiments, each NUMA node is managed by one NUMA node manager, and the NUMA node manager is connected to the bus 112. If the caches included in the set of caches belong to a first NUMA node, the processor core or the external device 130 may send a flush packet to a NUMA node manager of the first NUMA node, and then the NUMA node manager sends the flush packet to each cache. Further, after all caches in the set of caches flush respective cache lines that are in at least two cache lines indicated by the flush packet and that are within management scopes of the caches in the set of caches, the caches send flush completion packets to the NUMA node manager. Then, the NUMA node manager sends the flush completion packets to the processor core or the external device 130.

It is assumed that the caches included in the set of caches belong to a plurality of NUMA nodes (for example, a first NUMA node, a second NUMA node, and a third NUMA node). The first NUMA node is managed by a first NUMA node manager. The second NUMA node is managed by a second NUMA node manager. The third NUMA node is managed by a third NUMA node manager. The processor core or the external device 130 may send a flush packet to the first NUMA node manager, and the first NUMA node manager accepts a request and is upgraded to a main manager of the flush packet. The first NUMA node manager sends the flush packet to the second NUMA node manager and the third NUMA node manager. The first NUMA node manager sends the flush packet to each cache in the first NUMA node. The second NUMA node manager sends the flush packet to each cache in the second NUMA node. The third NUMA node manager sends the flush packet to each cache in the third NUMA node. Then, each cache in the second NUMA node sends a flush completion packet to the second NUMA node manager, and the second NUMA node manager sends the flush completion packet to the first NUMA node manager. Each cache in the third NUMA node sends a flush completion packet to the third NUMA node manager, and the third NUMA node manager sends the flush completion packet to the first NUMA node manager. The first NUMA node manager sends, to the processor core or the external device 130, the flush completion packet fed back by each cache in the second NUMA node and the third NUMA node and a flush completion packet fed back by each cache in the first NUMA node. A function of counting a quantity of fed-back flush completion packets may be implemented inside the first NUMA node manager, the second NUMA node manager, or the third NUMA node manager. For example, after receiving all flush completion packets in a management scope, the second NUMA node manager feeds back one flush completion packet to the first NUMA node manager. The first NUMA node manager sends only one fed-back flush completion packet to the processor core or the external device 130. Alternatively, the function of counting a quantity of fed-back flush completion packets may be implemented inside the processor core or the external device 130. The first NUMA node manager forwards all fed-back flush completion packets to the processor core or the external device 130.

In the conventional technology, it is assumed that the request device is an external device, and memory on the device may be used as a main memory. When the external device accesses a cache line in the memory of the device, the external device needs to send a read request to a cache in a current NUMA domain by using the external device management module 114 and the bus 112. If no cache line in the cache is matched, the cache needs to send the read request to a memory controller of the external device through address resolution. After reading a corresponding cache line, the memory controller of the external device feeds back the cache line to the cache. The cache caches the cache line in the cache slice 1112 and then feeds back the cache line to the external device. If the external device has full ownership of all cache lines in a page, the external device may directly read the memory of the external device without using the cache. The external device may send a flush packet to all caches in one or more NUMA domains according to the cache flushing method provided in this embodiment, to indicate the caches to flush all cache lines in one page. In this case, the external device exclusively occupies the cache lines in the page, and can directly read/write the cache lines until another processor core or device requests a cache line in the page.

A condition of triggering the request device to send a flush packet may alternatively be that the cache manages a cache line. For example, the cache actively flushes the cache line.

Physical address information carried in the flush packet is used to indicate to flush at least two cache lines. A physical address may be obtained by an address translator (address translator) module in the processor core by translating a logical address indicated by the flush instruction.

Accordingt to the invention, the flush packet is used to indicate to flush the at least two cache lines that are consecutive.

Specifically, the flush packet includes information used to indicate a physical address in a segment of continuous physical address space.

The continuous physical address space is a physical address space mapped to a main memory. Optionally, the continuous physical address space is a part of a physical address space mapped to the main memory. Alternatively, the continuous physical address space is all of a physical address space mapped to the main memory. It should be understood that, an operating system manages, by pages (page), the physical address space mapped to the main memory, so that the processor core reads/writes data of the physical address space mapped to the main memory. Therefore, the physical address space mapped to the main memory may be divided into a plurality of pages. Each page is divided based on a cache line size.

A system physical address space in a computer system represents a size of memory occupied by a computer entity. The system physical address space includes a physical address space mapped to the main memory, a memory mapped I/O (memory mapped I/O, MMIO) physical address space, and the like. The physical address space mapped to the main memory is a part of the system physical address space in the computer system. The other physical address space is a part of the system physical address space in the computer system.

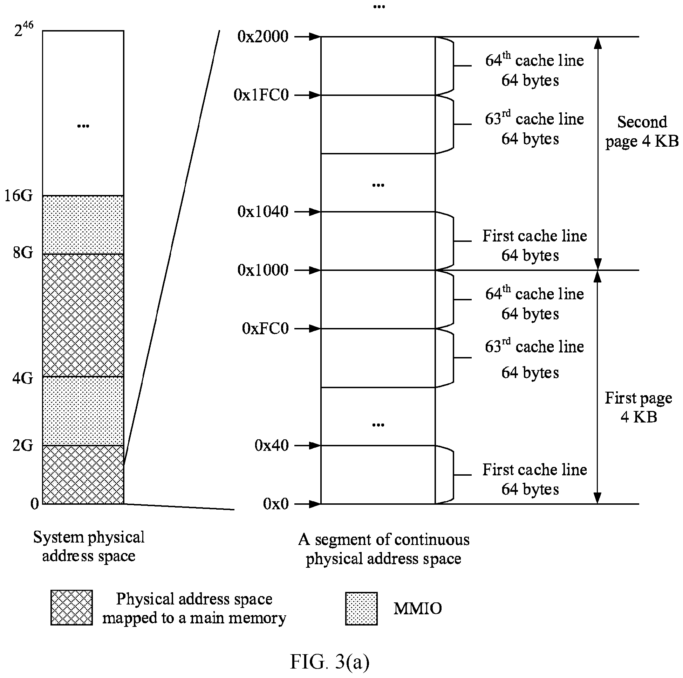

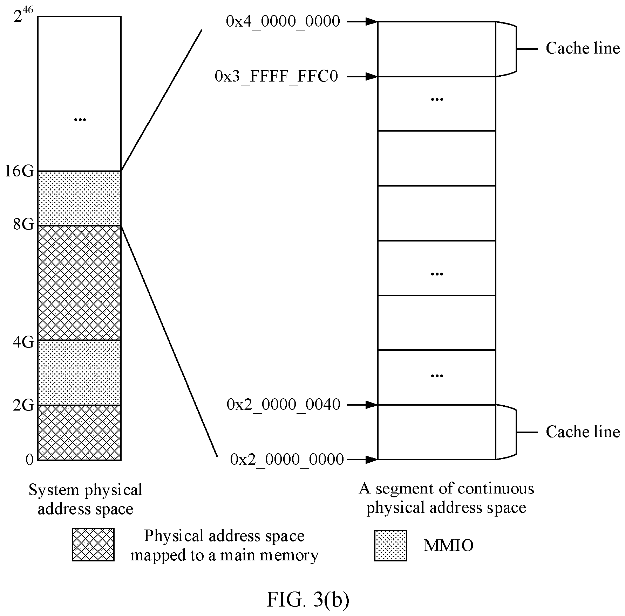

FIG. 3(a) and FIG. 3(b) are a schematic diagram of a continuous physical address space. As shown in FIG. 3(a), it is assumed that a size of a system physical address space is 2⁴⁶. The segment of continuous physical address space is a part of the physical address space mapped to the main memory. A size of one cache line is 64 bytes, and a size of one page is 4 KB. A 4-KB page includes 64 consecutive cache lines. Physical address 0x000 indicates a start address of the first page. Physical address 0x1000 indicates a start address of the second page. The first page includes 64 consecutive cache lines between physical address 0x000 and physical address 0x1000. The second page includes 64 consecutive cache lines between physical address 0x1000 and physical address 0x2000.

As shown in FIG. 3(b), the segment of continuous physical address space is all of the MMIO physical address space. Physical address 0x2_0000_0000 indicates a start address of all of the MMIO physical address space.

Optionally, the segment of continuous physical address space includes the physical address space mapped to the main memory and a physical address space not mapped to the main memory. For example, the segment of continuous physical address space includes a part of the physical address space mapped to the main memory and a part of the physical address space not mapped to the main memory.

The at least two cache lines in this embodiment include a cache line in which a start physical address in the segment of continuous physical address space is located to a cache line in which an end physical address in the segment of continuous physical address space is located. A physical address of a to-be-flushed continuous physical address space is aligned with a physical address of a cache line, and the to-be-flushed continuous physical address space is a space measured by a cache line size.

The start physical address in the segment of continuous physical address space may be any physical address in the MMIO physical address space. The end physical address in the segment of continuous physical address space may be any physical address in the MMIO physical address space.

The start physical address in the segment of continuous physical address space may be any physical address in the physical address space mapped to the main memory. The end physical address in the segment of continuous physical address space may be any physical address in the physical address space mapped to the main memory.

The following uses an example in which the continuous physical address space may be the physical address space mapped to the main memory, and the at least two cache lines indicated by the flush packet are cache lines in the physical address space mapped to the main memory for description. The start physical address and the end physical address in the segment of continuous physical address space are physical addresses in the physical address space mapped to the main memory.

In some embodiments, the start physical address in the segment of continuous physical address space may be any physical address between two cache lines in the physical address space mapped to the main memory. The end physical address in the segment of continuous physical address space may be any physical address between the two cache lines in the physical address space mapped to the main memory.

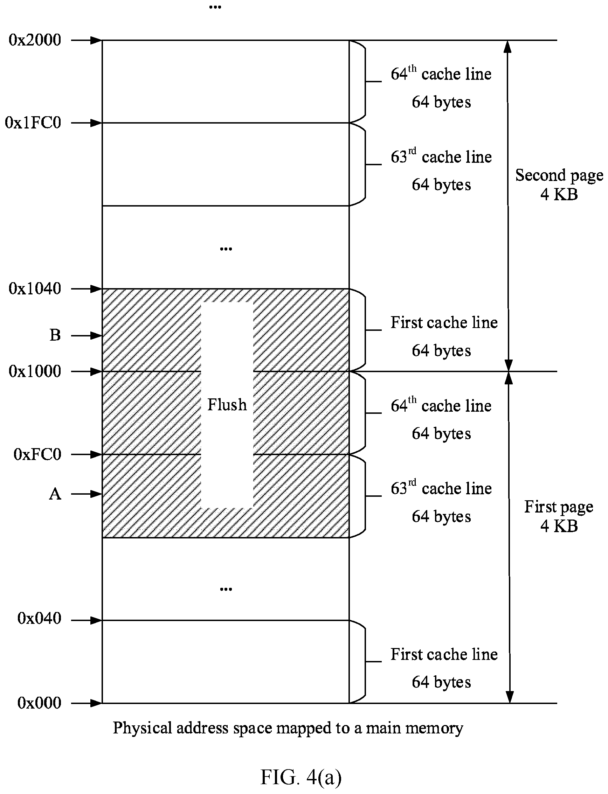

For example, as shown in FIG. 4(a), it is assumed that the segment of continuous physical address space is a continuous physical address space between a physical address at a point A and a physical address at a point B. The flush packet indicates to flush a cache line in which the physical address at the point A is located to a cache line in which the physical address at the point B is located. The cache line in which the physical address at the point A is located is the 63^{rd} cache line in the first page, and the cache line in which the physical address at the point B is located is the first cache line in the second page. The flush packet indicates to flush the 63^{rd} cache line in the first page, the 64^{th} cache line in the first page, and the first cache line in the second page.

In some other embodiments, the start physical address or the end physical address in the segment of continuous physical address space may be a physical address of a cache line in the physical address space mapped to the main memory. The cache may flush the cache line indicated by the physical address of the cache line, or the cache may not flush the cache line indicated by the physical address of the cache line.

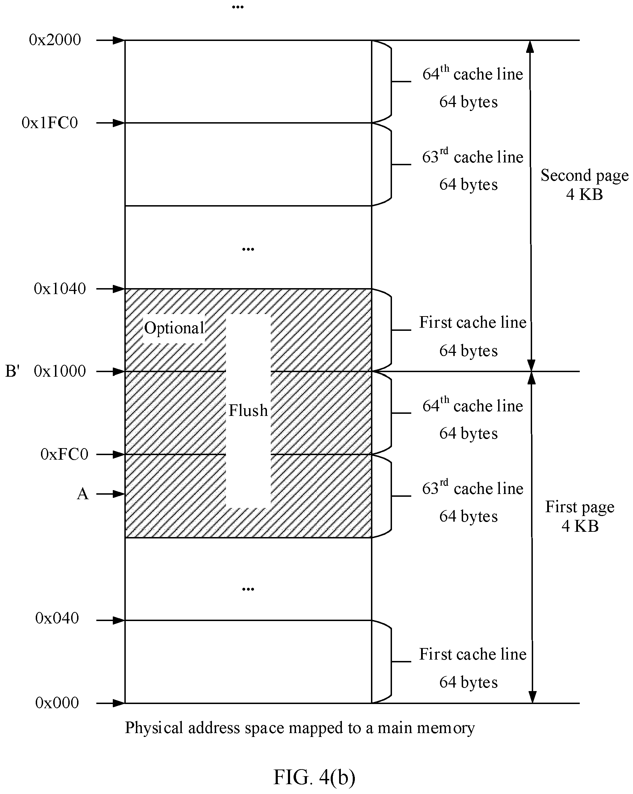

As shown in FIG. 4(b), it is assumed that the segment of continuous physical address space is a continuous physical address space between a physical address at a point A and a physical address at a point B'. Because the physical address at the point B' is a physical address of the first cache line in the second page, the flush packet may indicate to flush the 63^{rd} cache line in the first page and the 64^{th} cache line in the first page, and not to flush the first cache line in the second page. Alternatively, the flush packet indicates to flush the 63^{rd} cache line in the first page, the 64^{th} cache line in the first page, and the first cache line in the second page.

In some embodiments, the request device flushes a cache line in a cache at a page size granularity. The flush packet may indicate to flush all consecutive cache lines in a page.

In a first possible implementation, the information about the physical address in the segment of continuous physical address space includes a start physical address of a page. The start physical address of the page is any physical address whose zeroth bit to eleventh bit are 0. The flush packet further includes a page type, and the page type is used to describe a page size. For example, page sizes specified in the x86 architecture include 4K, 2M, and 1G.

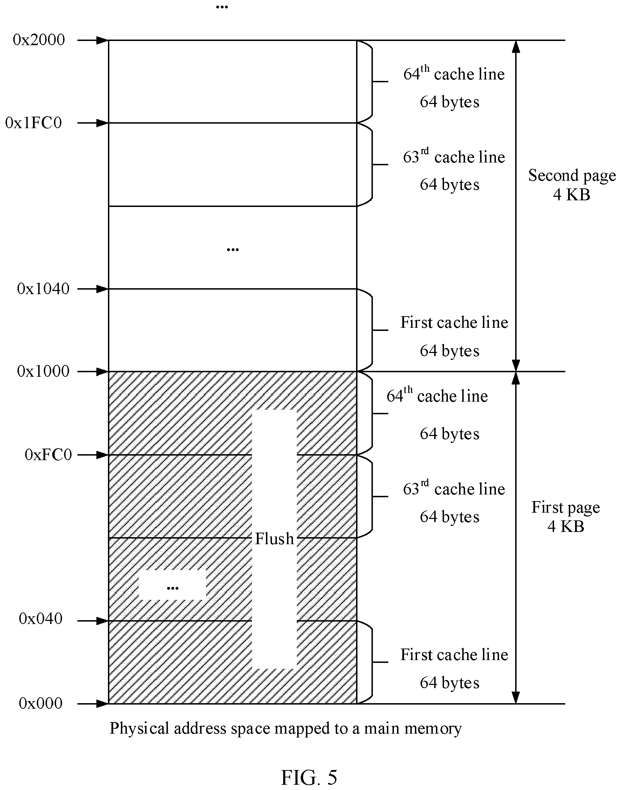

For example, a start physical address of a page included in the flush packet is 0x000, a page size is 4K, and a size of one cache line is 64 bytes. As shown in FIG. 5, the flush packet indicates to flush 64 cache lines in the first page, namely, 64 cache lines between physical address 0x000 and physical address 0x1000.

For another example, it is assumed that a start physical address of a page is 0x040, a page size is 4K, and a size of one cache line is 64 bytes. The flush packet indicates to flush 64 cache lines between physical address 0x040 and physical address 0x1040.

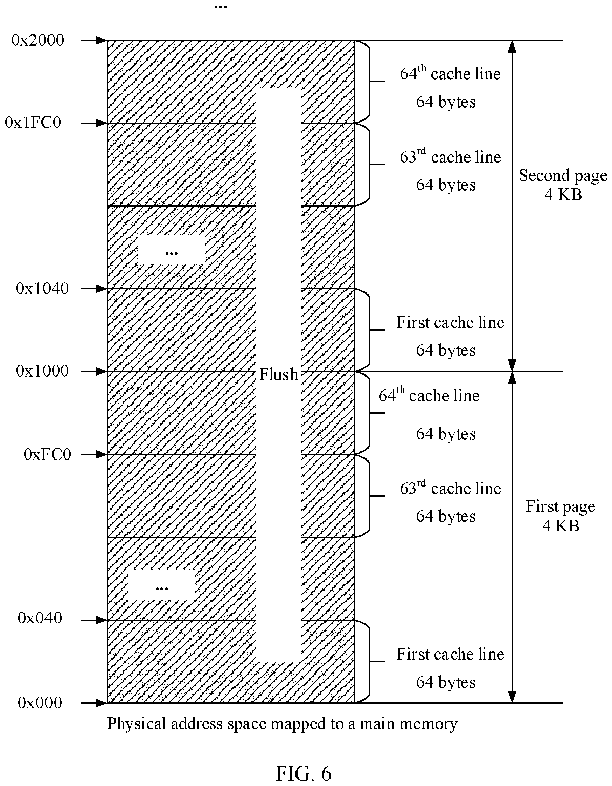

For another example, as shown in FIG. 6, it is assumed that a start physical address of a page is 0x000, a page size is 8K, and a size of one cache line is 64 bytes. The flush packet indicates to flush 128 cache lines between physical address 0x000 and physical address 0x2000.

For example, the flush instruction may be preset in a computing device. For example, a PKFLUSH instruction is used to flush a 4K page. A PMFLUSH instruction is used to flush a 2M page. A PGFLUSH instruction is used to flush a 1G page.

Using PKFLUSH as an example, an instruction format may be written as, but is not limited to, PKFLUSH es: [esi] in a 32-bit mode, or PKFLUSH [rsi] in a 64-bit mode. es is a segment register for storing a data segment, and esi and rsi are general purpose (general purpose) registers used to store logical addresses.

For example, the request device may send a flush packet to a set of caches according to a flush instruction PKFLUSH, to indicate to flush a 4K page.

In a second possible implementation, the information about the physical address in the segment of continuous physical address space includes a start physical address of a page and an end physical address of the page.

For example, a start physical address of a page included in the flush packet is 0x000, and an end physical address of the page is 0x1000. As shown in FIG. 5, the flush packet indicates to flush 64 cache lines in the first page, namely, 64 cache lines between physical address 0x000 and physical address 0x1000.

For another example, a start physical address of a page included in the flush packet is 0x000, and an end physical address of the page is 0x2000. As shown in FIG. 6, the flush packet indicates to flush 64 cache lines in the first page and 64 cache lines in the second page, namely, 128 cache lines between physical address 0x000 and physical address 0x2000.

In a third possible implementation, the information about the physical address in the segment of continuous physical address space includes a physical address of a cache line in a page. The flush packet further includes a page type, and the page type is used to describe a page size. The physical address of the cache line in the page may be a physical address of any cache line in the page.

For example, a physical address of a cache line in a page included in the flush packet is 0xFC0, and a page size is 4K. As shown in FIG. 5, the flush packet indicates to flush 64 cache lines in the first page, namely, 64 cache lines between physical address 0x000 and physical address 0x1000.

For another example, physical addresses of cache lines in pages included in the flush packet are 0xFC0 and 0x1040, and a page size is 4K. As shown in FIG. 6, the flush packet indicates to flush 64 cache lines in the first page and 64 cache lines in the second page, namely, 128 cache lines between physical address 0x000 and physical address 0x2000.

In some other embodiments, the request device flushes a cache line in a cache at a granularity of any quantity of cache lines. The flush packet may indicate to flush consecutive cache lines in one page or consecutive cache lines in a plurality of pages.

In a fourth possible implementation, the information about the physical address in the segment of continuous physical address space includes a physical address of one cache line and a quantity of cache lines. It is assumed that the flush packet indicates to flush N cache lines, and the flush packet indicates to flush the N consecutive cache lines from the physical address of the cache line.

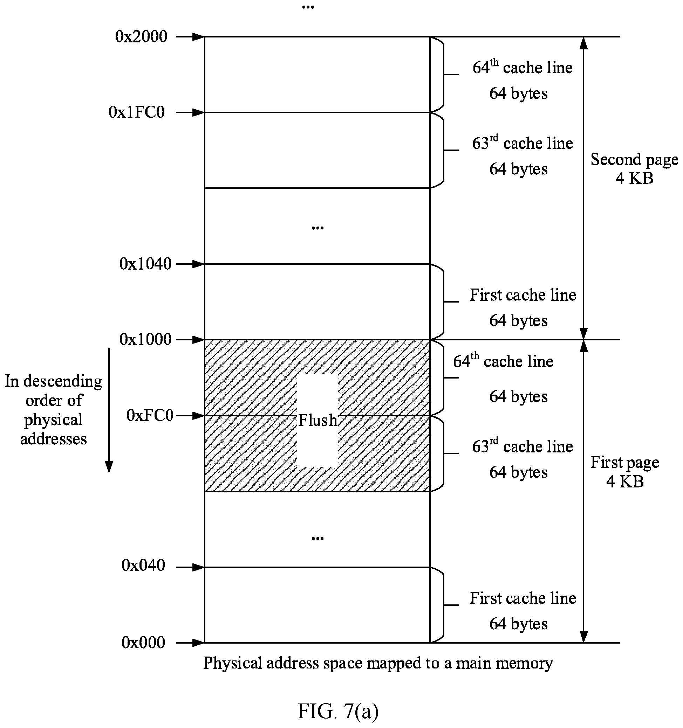

In some embodiments, the N cache lines may be flushed in descending order of physical addresses from the physical address of the cache line. As shown in FIG. 7(a), a physical address of a cache line included in the flush packet is 0x1000, and a quantity of cache lines is 2. The flush packet indicates to flush the 64^{th} cache line and the 63^{rd} cache line in the first page.

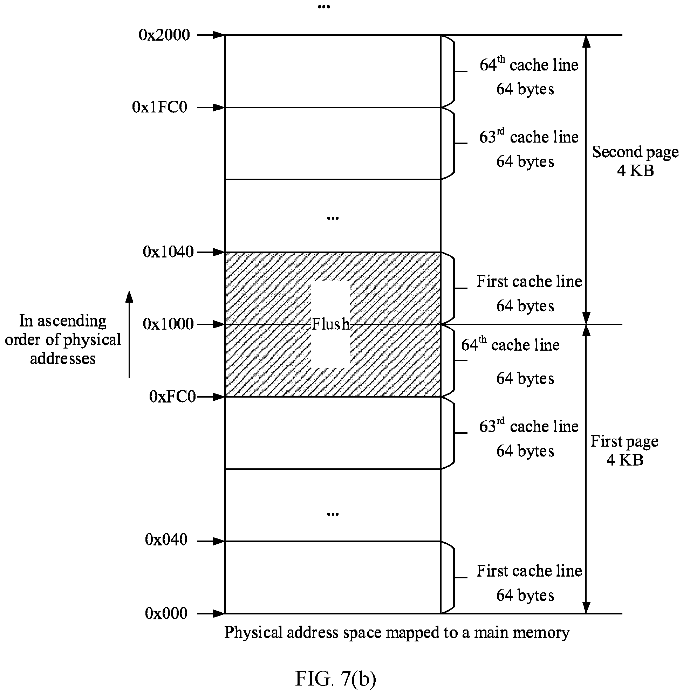

In some other embodiments, the N cache lines may be flushed in ascending order of physical addresses from the physical address of the cache line. As shown in FIG. 7(b), a physical address of a cache line included in the flush packet is 0x1000, and a quantity of cache lines is 2. The flush packet indicates to flush the 64^{th} cache line in the first page and the first cache line in the second page.

Optionally, the segment of continuous physical address space is the MMIO physical address space. The flush packet indicates to flush N consecutive cache lines from a physical address of a cache line in the MMIO physical address space. It should be noted that after the flush packet indicates to flush the cache line in the MMIO physical address space, the flushed cache line cannot be written back to MMIO.

In a fifth possible implementation, the information about the physical address in the segment of continuous physical address space includes a physical address and an immediate. The immediate indicates a quantity of low-order bits in the physical address. It should be understood that a cache may generate a mask based on an immediate, generate a new physical address by using the mask and the physical address, and flush a cache line by using the new physical address. For a specific method for flushing the cache line by using the new physical address, refer to the foregoing described possible implementations. Details are not described again.

For example, the flush packet indicates to flush a block with a base of 2. The request device may construct a flush instruction, for example, an RFLUSH instruction, for flushing cache lines at any granularity. An instruction format can be written as RFLUSH es: [esi], imm8.

The set value imm8 is an integer from 6 to a maximum value of a physical address, for example, 6, 7, 8, ..., or 51. When the set value exceeds the maximum value of the physical address, the RFLUSH instruction instructs to flush all cache lines in the physical address space mapped to the main memory. When the set value is less than 6, the RFLUSH instruction instructs to flush one cache line.

When imm8 is a value between 6 and the maximum value of the physical address, the RFLUSH instruction instructs to flush cache lines of a quantity of any power of 2. For example, when the set value is 12, an AND operation is performed on an input physical address and 0x000 to obtain a start physical address, and an OR operation is performed on the input physical address and 0xFFF to obtain an end physical address. For example, the input physical address is 0xABCDE010. When the set value is 12, the flush packet indicates to flush all cache lines in a physical address space from physical address 0xABCDE000 to physical address 0xABCDEFFF; or when the set value is 16, the flush packet indicates to flush all cache lines in a physical address space from physical address 0xABCD0000 to physical address 0xABCDFFFF.

Based on an immediate, a physical address indicating a cache line in physical addresses may be deleted. An address indicating a page is reserved, or some of addresses indicating pages are reserved. The flush packet may include the address indicating the page or some of the addresses indicating the pages.

Optionally, the information about the physical address in the segment of continuous physical address space includes a physical address and a mask. An OR operation is performed on the mask and the physical address, and lower-order bits in the physical address are deleted, to obtain a physical address in which some bits are reserved. For example, the physical address is 0xABCDE010, the mask is 0xFFFF FFFF FFFF F000, and the physical address in which some bits are reserved is 0xABCDE.

S202: The cache receives the flush packet from the request device.

S203: The cache flushes a cache line that is in the at least two cache lines indicated by the flush packet and that is within a management scope of the cache.

All cache lines that the flush packet indicates to flush are stored in the set of caches, and the set of caches includes at least one cache. The cache is any cache in the set of caches.

It should be understood that because cache lines in the cache include nonconsecutive physical addresses, the cache lines that the flush packet indicates to flush may be located in a plurality of caches. Each cache flushes a cache line that is in the at least two cache lines indicated by the flush packet and that is within a management scope of the cache.

Usually, each cache line includes a tag field (tag), a status field (status), and a data field (data). The tag field is used to indicate a physical address. The status field is used to indicate a status of the cache line. The data field is used to store data.

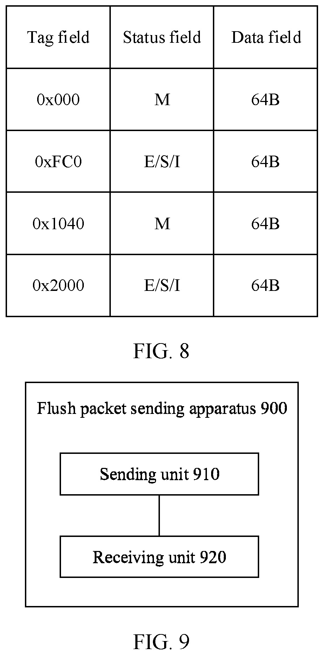

For example, the flush packet indicates to flush 64 cache lines in the first page, namely, 64 cache lines between physical address 0x000 and physical address 0x1000. As shown in FIG. 8, it is assumed that cache lines in the cache include physical address 0x000, physical address 0xFC0, physical address 0x1040, and physical address 0x2000. Because the cache lines indicated by the flush packet include the cache line with physical address 0x000 and the cache line with physical address 0xFC0, the cache flushes the cache line including 0x000 and the cache line including 0xFC0.

When a cache line is in a modified state (modified, M), a cache manager may write the cache line in a cache slice back to a main memory or directly discard the cache line according to different types of flush instructions. When a cache line is in an unmodified state, the cache manager may discard the cache line in the cache slice. As shown in FIG. 8, a state of the cache line including 0x000 is a modified state, and the cache manager writes the cache line including 0x000 back to the main memory or directly discards it. A state of the cache line including 0xFC0 is an unmodified state (E/S/I), and the cache manager discards the cache line including 0xFC0.

Therefore, the cache that receives the flush packet flushes a cache line that is in the 64 cache lines in the page indicated by the flush packet and that is within a management scope of the cache.

For a specific indication manner in which the flush packet indicates to flush the at least two cache lines that are consecutive, refer to the descriptions in the foregoing possible implementations. Details are not described again. The cache flushes the cache line that is in the at least two cache lines indicated by the flush packet and that is within the management scope of the cache.

S204: The cache sends a flush completion packet to the request device.

S205: The request device receives flush completion packets from all caches in the set of caches.

Compared with a solution in which a processor core sends one flush packet to flush one cache line each time in the conventional technology, in the cache flushing method provided in this embodiment, the processor core sends one flush packet to flush at least two cache lines. When a same quantity of cache lines are flushed, sending the flush packet in a broadcast manner reduces a quantity of flush packet sending times, so that serial processing of a flush task is changed into parallel processing. This improves flushing efficiency, and effectively reduces internal resources of a processor that are occupied for flushing the cache lines.

Compared with a solution in which the processor core flushes cache lines in all level 3 caches in the conventional technology, in the cache flushing method provided in this embodiment, the flush packet sent by the processor core may indicate to flush any quantity of cache lines. This prevents the processor core and another device from flushing data that is being used by another core or device, avoids affecting performance of another process, and improves accuracy of flushing a cache line.

In addition, the flushing described in this embodiment may alternatively be described as refreshing, and the flush packet may alternatively be described as a refresh packet.

It may be understood that, to implement the functions in the foregoing embodiments, the processor core and the cache include corresponding hardware structures and/or software modules for executing the functions. A person of ordinary skill in the art should easily be aware that, in combination with the units and the method steps in the examples described in the embodiments disclosed in this application, this application can be implemented by hardware or a combination of hardware and computer software. Whether a function is performed by hardware or hardware driven by computer software depends on particular application scenarios and design constraints of the technical solutions.

FIG. 9 is a schematic diagram of a structure of a possible flush packet sending apparatus according to an embodiment of this application. The flush packet sending apparatus may be configured to implement the functions of the processor core in the foregoing method embodiments, and therefore beneficial effects of the foregoing method embodiments can also be implemented. In this embodiment of this application, the flush packet sending apparatus may be any one of the processor core 0 to the processor core N shown in FIG. 1, or may be the external device 130 shown in FIG. 1, or may be a module (for example, a chip) applied to a processor core or an external device.

As shown in FIG. 9, the flush packet sending apparatus 900 includes a sending unit 910 and a receiving unit 920. The flush packet sending apparatus 900 is configured to implement a function of the request device in the method embodiment shown in FIG. 2.

When the flush packet sending apparatus 900 is configured to implement the function of the request device in the method embodiment shown in FIG. 2, the sending unit 910 is configured to perform S201, and the receiving unit 920 is configured to perform S205.

For more detailed descriptions of the sending unit 910 and the receiving unit 920, directly refer to the related descriptions of the method embodiment shown in FIG. 2. Details are not described herein again. It may be understood that functions of the sending unit 910 and the receiving unit 920 may alternatively be implemented by the processor core or the external device in FIG. 1.

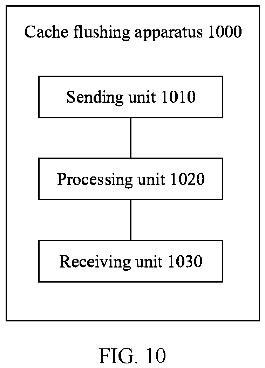

As shown in FIG. 10, a cache flushing apparatus 1000 includes a sending unit 1010, a processing unit 1020, and a receiving unit 1030. The cache flushing apparatus 1000 is configured to implement a function of the cache in the method embodiment shown in FIG. 2.

When the cache flushing apparatus 1000 is configured to implement the function of the cache in the method embodiment shown in FIG. 2, the receiving unit 1030 is configured to perform S202, the processing unit 1020 is configured to perform S203, and the sending unit 1010 is configured to perform S204.

For more detailed descriptions of the sending unit 1010, the processing unit 1020, and the receiving unit 1030, directly refer to the related descriptions of the method embodiment shown in FIG. 2. Details are not described herein again. It may be understood that functions of the sending unit 1010, the processing unit 1020, and the receiving unit 1030 may alternatively be implemented by the cache in FIG. 1.

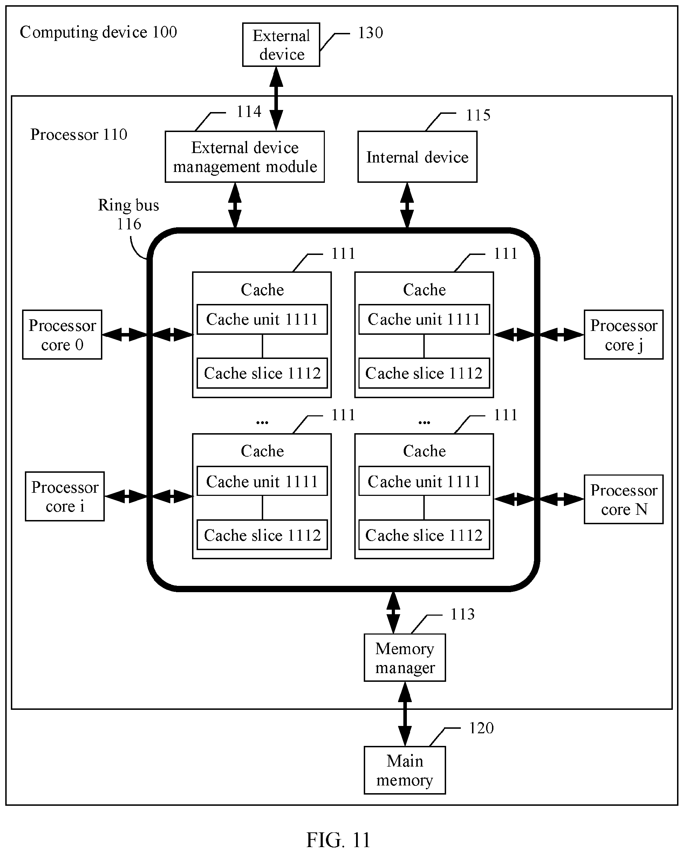

The connection manner of the processor core and the cache 111 shown in FIG. 1 is merely an example description. In a possible implementation, the processor core is connected to the cache 111 by using a ring bus (ring bus), and accesses the cache 111 by using the ring bus. As shown in FIG. 11, a computing device 100 includes a processor 110, a main memory 120, and an external device 130. The processor 110 includes processor cores, caches 111, and a ring bus 116. The cache 111 is disposed in a ring of the ring bus 116, and the cache 111 is connected to the ring bus 116. The processor core is disposed outside the ring of the ring bus 116, and the processor core is connected to the ring bus 116. Optionally, the processor core is disposed in the ring of the ring bus 116, and the processor core is connected to the ring bus 116. The cache 111 is disposed outside the ring of the ring bus 116, and the cache 111 is connected to the ring bus 116.

In addition, a memory manager 113, an external device management module 114, and an internal device 115 included in the processor 110 are separately connected to the ring bus 116. The memory manager 113 is connected to the main memory 120. The external device management module 114 is connected to the external device 130.

In this embodiment, the processor core sends a flush packet to a set of caches 111 by using the ring bus 116 in a broadcast manner. It may be understood that all caches within a broadcast address range can receive the flush packet. Physical address information carried in the flush packet is used to indicate to flush at least two cache lines. The set of caches includes at least one cache. Further, the processor core receives flush completion packets from all caches in the set of caches.

Compared with a solution in which a processor core sends one flush packet to flush one cache line each time in the conventional technology, in a flush packet sending method provided in the embodiments, the processor core sends one flush packet to flush at least two cache lines. When a same quantity of cache lines are flushed, sending the flush packet in a broadcast manner reduces a quantity of flush packet sending times, so that serial processing of a flush task is changed into parallel processing. This improves flushing efficiency, and effectively reduces internal resources of a processor that are occupied for flushing the cache lines.

Compared with a solution in which a processor core flushes cache lines in all level 3 caches in the conventional technology, in a flush packet sending method provided in the embodiments, the flush packet sent by the processor core may indicate to flush any quantity of cache lines. This avoids flushing data that is being used by another processor core or device, avoids affecting performance of another process, and improves accuracy of flushing a cache line.

The cache 111 receives the flush packet, flushes a cache line that is in the at least two cache lines indicated by the flush packet and that is within a management scope of the cache, and sends a flush completion packet to the processor core. It should be noted that if the cache line indicated by the flush packet is not within the management scope of the cache 111, the cache 111 also sends the flush completion packet to the processor core.

For an explanation of the modules included in the computing device 100 and an explanation that the processor core sends the flush packet to the set of caches 111 in a broadcast manner, refer to the descriptions of the foregoing embodiments. Details are not described again.

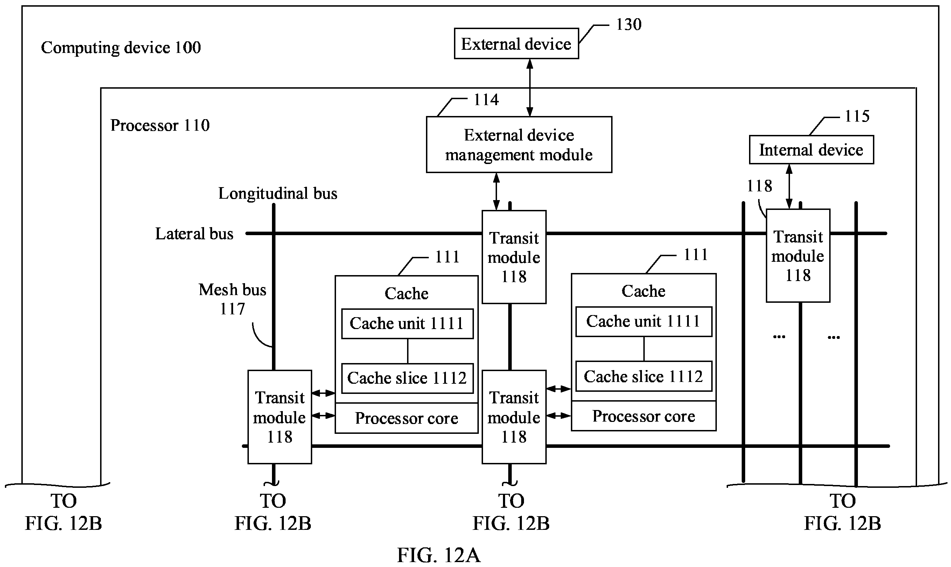

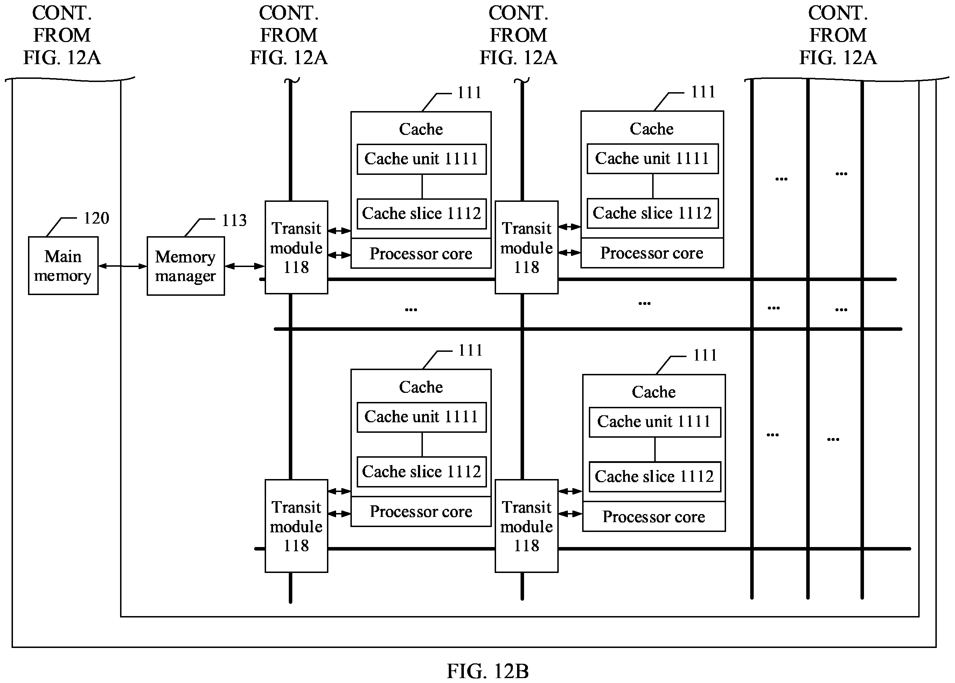

In another possible implementation, the processor core and the cache 111 are connected by using a mesh bus (mesh bus), and the processor core accesses the cache 111 by using the mesh bus. As shown in FIG. 12A and FIG. 12B, a computing device 100 includes a processor 110, a main memory 120, and an external device 130. The processor 110 includes processor cores, caches 111, a memory manager 113, an external device management module 114, an internal device 115, a mesh bus 117, and transit modules 118. The processor cores, the caches 111, the memory manager 113, the external device management module 114, and the internal device 115 are connected to the mesh bus 117 by using the transit modules 118. The processor cores, the caches 111, the memory manager 113, the external device management module 114, and the internal device 115 perform instruction or data transmission by using the transit modules 118. The transit module 118 is connected to a lateral bus and a longitudinal bus of the mesh bus 117. The transit module 118 is configured to transmit data from the lateral bus to the longitudinal bus. The transit module 118 is further configured to transmit data from the longitudinal bus to the lateral bus.

In addition, the memory manager 113, the external device management module 114, and the internal device 115 included in the processor 110 are separately connected to the mesh bus 117. The memory manager 113 is connected to the main memory 120. The external device management module 114 is connected to the external device 130.

In this embodiment, the processor core sends a flush packet to a set of caches 111 by using the mesh bus 117 in a broadcast manner. It may be understood that all caches within a broadcast address range can receive the flush packet. Physical address information carried in the flush packet is used to indicate to flush at least two cache lines. The set of caches includes at least one cache. Further, the processor core receives flush completion packets from all caches in the set of caches.

Compared with a solution in which a processor core sends one flush packet to flush one cache line each time in the conventional technology, in a flush packet sending method provided in the embodiments, the processor core sends one flush packet to flush at least two cache lines. When a same quantity of cache lines are flushed, sending the flush packet in a broadcast manner reduces a quantity of flush packet sending times, so that serial processing of a flush task is changed into parallel processing. This improves flushing efficiency, and effectively reduces internal resources of a processor that are occupied for flushing the cache lines.

Compared with a solution in which a processor core flushes cache lines in all level 3 caches in the conventional technology, in a flush packet sending method provided in the embodiments, the flush packet sent by the processor core may indicate to flush any quantity of cache lines. This avoids flushing data that is being used by another processor core or device, avoids affecting performance of another process, and improves accuracy of flushing a cache line.

The cache 111 receives the flush packet, flushes a cache line that is in the at least two cache lines indicated by the flush packet and that is within a management scope of the cache, and sends a flush completion packet to the processor core. It should be noted that if the cache line indicated by the flush packet is not within the management scope of the cache 111, the cache 111 also sends the flush completion packet to the processor core.

For an explanation of the modules included in the computing device 100 and an explanation that the processor core sends the flush packet to the set of caches 111 in a broadcast manner, refer to the descriptions of the foregoing embodiments. Details are not described again.

The method steps in the embodiments of this application may be implemented by hardware, or may be implemented by a processor by executing a software instruction. The software instruction may include a corresponding software module. The software module may be stored in a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well-known in the art. For example, a storage medium is coupled to a processor, so that the processor can read information from the storage medium or write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist in the network device or the terminal device as discrete assemblies.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer programs or instructions. When the computer programs or instructions are loaded and executed on a computer, all or some of procedures or functions in the embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium such as a floppy disk, a hard disk, or a magnetic tape, may be an optical medium such as a digital video disc (digital video disc, DVD), or may be a semiconductor medium such as a solid state drive (solid state drive, SSD).

In the embodiments of this application, if there is no special description or logic conflict, terms and/or descriptions in different embodiments are consistent and may be mutually referenced. Technical features in different embodiments may be combined to form a new embodiment based on an internal logical relationship between the technical features.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" in the text description of this application usually represents an "or" relationship between associated objects. In a formula of this application, the character "/" indicates a "division" relationship between associated objects.

It may be understood that numbers in the embodiments of this application are merely for differentiation for ease of description, and are not intended to limit the scope of the embodiments of this application. Sequence numbers of the foregoing processes do not mean execution sequences. The execution sequences of the processes should be determined according to functions and internal logic of the processes.

## Claims

1. A flush packet sending method, comprising:
sending (S201), by a request device, a flush packet to a set of caches in a broadcast manner, wherein physical address information carried in the flush packet is used to indicate to flush at least two cache lines, and the set of caches comprises at least one cache; and
receiving (S205), by the request device, flush completion packets from all caches in the set of caches;
wherein the flush packet is used to indicate to flush the at least two cache lines that are consecutive; wherein the flush packet comprises information used to indicate a physical address in a segment of continuous physical address space, and the at least two cache lines comprise a cache line in which a start physical address in the segment of continuous physical address space is located and a cache line in which an end physical address in the segment of continuous physical address space is located; and
wherein the continuous physical address space is a physical address space mapped to a main memory, a physical address in a to-be-flushed continuous physical address space is aligned with a physical address of a cache line, and the to-be-flushed continuous physical address space is a space measured by a cache line size.

2. The method according to claim 1, wherein:
the information about the physical address in the segment of continuous physical address space comprises a start physical address of a page, the flush packet further comprises a page type, and the page type is used to describe a size of the page; or
the information about the physical address in the segment of continuous physical address space comprises a start physical address of a page and an end physical address of the page; or
the information about the physical address in the segment of continuous physical address space comprises a physical address of a cache line in at least one page, the flush packet further comprises a page type of each page, and the page type is used to describe a size of the page; or the information about the physical address in the segment of continuous physical address space comprises a physical address of one cache line and a quantity of cache lines; or
the information about the physical address in the segment of continuous physical address space comprises one physical address and an immediate, and the immediate indicates a quantity of low-order bits in the physical address.

3. The method according to claim 1 or 2, wherein the request device comprises but is not limited to the following devices: a processor core, an external device, and another device connected to a bus.

4. A cache flushing method, comprising:
receiving (S202), by a cache, a flush packet from a request device, wherein the flush packet is used to indicate to flush at least two cache lines;
flushing (S293), by the cache, a cache line that is in the at least two cache lines indicated by the flush packet and that is within a management scope of the cache; and
sending (S204), by the cache, a flush completion packet to the request device;
wherein the flush packet is used to indicate to flush the at least two cache lines that are consecutive;
wherein the flush packet comprises information used to indicate a physical address in a segment of continuous physical address space, and the at least two cache lines comprise a cache line in which a start physical address in the segment of continuous physical address space is located and a cache line in which an end physical address in the segment of continuous physical address space is located; and
wherein the continuous physical address space is a physical address space mapped to a main memory, a physical address in a to-be-flushed continuous physical address space is aligned with a physical address of a cache line, and the to-be-flushed continuous physical address space is a space measured by a cache line size.

5. The method according to claim 4, wherein all cache lines flushed based on the flush packet are stored in a set of caches, the set of caches comprises at least one cache, and the cache is any cache in the set of caches, and wherein the cache comprised in the set of caches belongs to one or more non-uniform memory access NUMA nodes in a NUMA system.

6. A processor (110), comprising at least one processor core and at least one cache (111), wherein
the processor core is configured to send a flush packet to a set of caches in a broadcast manner, wherein physical address information carried in the flush packet is used to indicate to flush at least two cache lines, and the set of caches comprises at least one cache;
the cache (111) is configured to receive the flush packet from the processor core, wherein the flush packet is used to indicate to flush the at least two cache lines;
the cache (111) is further configured to flush a cache line that is in the at least two cache lines indicated by the flush packet and that is within a management scope of the cache;
the cache (111) is further configured to send a flush completion packet to the processor core; and
the processor core is further configured to receive flush completion packets from all caches in the set of caches;
wherein the flush packet is used to indicate to flush the at least two cache lines that are consecutive;
wherein the flush packet comprises information used to indicate a physical address in a segment of continuous physical address space, and the at least two cache lines comprise a cache line in which a start physical address in the segment of continuous physical address space is located and a cache line in which an end physical address in the segment of continuous physical address space is located; and
wherein the continuous physical address space is a physical address space mapped to a main memory (120), a physical address in a to-be-flushed continuous physical address space is aligned with a physical address of a cache line, and the to-be-flushed continuous physical address space is a space measured by a cache line size.

7. A computing device (100) comprising a processor (110) according to claim 6 and an external device (130);
wherein the computing device (100) is configured such that, when the processor core or the external device (130) executes a group of computer instructions, the method according to any one of claims 1 to 3 is implemented, and when the cache (111) executes the group of computer instructions, the method according to claim 4 or claim 5 is implemented.

8. A processor (110) according to claim 6, further comprising a ring/mesh bus (116, 117), an external device management module (114), and a memory manager (113), wherein the processor core, the cache (111), the external device management module (114), and the memory manager (113) are connected by using the ring/mesh bus (116/117); and
wherein the processor (110) is configured such that, when the processor core executes a group of computer instructions, the method according to any one of claims 1 to 3 is implemented, and when the cache (111) executes the group of computer instructions, the method according to claim 4 or claim 5 is implemented.

## Patentansprüche

1. Löschpaketsendeverfahren, umfassend:
Senden (S201), durch eine Anfrageeinrichtung, eines Löschpakets in einer Rundrufweise an einen Satz von Caches, wobei in dem Löschpaket enthaltene physikalische Adressinformationen verwendet werden, um anzuzeigen, dass mindestens zwei Cache-Zeilen zu löschen sind, und wobei der Satz von Caches mindestens einen Cache umfasst; und
Empfangen (S205), durch die Anfrageeinrichtung, von Löschabschlusspaketen aus allen Caches in dem Satz von Caches;
wobei das Löschpaket verwendet wird, um anzuzeigen, dass die mindestens zwei Cache-Zeilen, die aufeinander folgen, zu löschen sind; wobei das Löschpaket Informationen umfasst, die verwendet werden, um eine physikalische Adresse in einem Segment eines kontinuierlichen physikalischen Adressraums anzuzeigen, und die mindestens zwei Cache-Zeilen eine Cache-Zeile, in der sich eine physikalische Startadresse in dem Segment des kontinuierlichen physikalischen Adressraums befindet, und eine Cache-Zeile, in der sich eine physikalische Endadresse in dem Segment des kontinuierlichen physikalischen Adressraums befindet, umfassen; und
wobei der kontinuierliche physikalische Adressraum ein physikalischer Adressraum ist, der einem Hauptspeicher zugeordnet ist, eine physikalische Adresse in einem zu löschenden kontinuierlichen physikalischen Adressraum mit einer physikalischen Adresse einer Cache-Zeile ausgerichtet ist und der zu löschende kontinuierliche physikalische Adressraum ein Raum ist, der anhand einer Cache-Zeilengröße gemessen wird.

2. Verfahren nach Anspruch 1, wobei:
die Informationen über die physikalische Adresse in dem Segment des kontinuierlichen physikalischen Adressraums eine physikalische Startadresse einer Seite umfassen, das Löschpaket ferner einen Seitentyp umfasst und der Seitentyp verwendet wird, um eine Größe der Seite zu beschreiben; oder
die Informationen über die physikalische Adresse in dem Segment des kontinuierlichen physikalischen Adressraums eine physikalische Startadresse einer Seite und eine physikalische Endadresse der Seite umfassen; oder
die Informationen über die physikalische Adresse in dem Segment des kontinuierlichen physikalischen Adressraums eine physikalische Adresse einer Cache-Zeile auf mindestens einer Seite umfassen, das Löschpaket ferner einen Seitentyp jeder Seite umfasst und der Seitentyp verwendet wird, um eine Größe der Seite zu beschreiben; oder
die Informationen über die physikalische Adresse in dem Segment des kontinuierlichen physikalischen Adressraums eine physikalische Adresse einer Cache-Zeile und eine Anzahl von Cache-Zeilen umfassen; oder
die Informationen über die physikalische Adresse in dem Segment des kontinuierlichen physischen Adressraums eine physikalische Adresse und eine unmittelbare Adressierung umfassen und die unmittelbare Adressierung eine Anzahl von niederwertigen Bits in der physikalischen Adresse anzeigt.

3. Verfahren nach Anspruch 1 oder 2, wobei die Anfrageeinrichtung die folgenden Einrichtungen umfasst, aber nicht darauf beschränkt ist: einen Prozessorkern, eine externe Einrichtung und eine weitere Einrichtung, die an einen Bus angeschlossen ist.

4. Cache-Löschverfahren, umfassend:
Empfangen (S202), durch einen Cache, eines Löschpakets von einer Anfrageeinrichtung, wobei das Löschpaket verwendet wird, um anzuzeigen, dass mindestens zwei Cache-Zeilen zu löschen sind;
Löschen (S293), durch den Cache, einer Cache-Zeile, die sich in den mindestens zwei Cache-Zeilen, die durch das Löschpaket angezeigt werden, befindet und die sich innerhalb eines Verwaltungsbereichs des Cache befindet; und
Senden (S204), durch den Cache, eines Löschabschlusspakets an die Anfrageeinrichtung;
wobei das Löschpaket verwendet wird, um anzuzeigen, dass die mindestens zwei Cache-Zeilen, die aufeinander folgen, zu löschen sind;
wobei das Löschpaket Informationen umfasst, die verwendet werden, um eine physikalische Adresse in einem Segment eines kontinuierlichen physikalischen Adressraums anzuzeigen, und die mindestens zwei Cache-Zeilen eine Cache-Zeile, in der sich eine physikalische Startadresse in dem Segment des kontinuierlichen physikalischen Adressraums befindet, und eine Cache-Zeile, in der sich eine physikalische Endadresse in dem Segment des kontinuierlichen physikalischen Adressraums befindet, umfassen; und
wobei der kontinuierliche physikalische Adressraum ein physikalischer Adressraum ist, der einem Hauptspeicher zugeordnet ist, eine physikalische Adresse in einem zu löschenden kontinuierlichen physikalischen Adressraum mit einer physikalischen Adresse einer Cache-Zeile ausgerichtet ist und der zu löschende kontinuierliche physikalische Adressraum ein Raum ist, der anhand einer Cache-Zeilengröße gemessen wird.

5. Verfahren nach Anspruch 4, wobei alle Cache-Zeilen, die basierend auf dem Löschpaket gelöscht wurden, in einem Satz von Caches gespeichert werden, der Satz von Caches mindestens einen Cache umfasst und der Cache ein beliebiger Cache in dem Satz von Caches ist und wobei der Cache, der in dem Satz von Caches enthalten ist, zu einem oder mehreren ungleichmäßigen Speicherzugriffsknoten, NUMA-Knoten, in einem NUMA-System gehört.

6. Prozessor (110), umfassend mindestens einen Prozessorkern und mindestens einen Cache (111), wobei
der Prozessorkern dazu konfiguriert ist, ein Löschpaket in einer Rundrufweise an einen Satz von Caches zu senden, wobei in dem Löschpaket enthaltene physikalische Adressinformationen verwendet werden, um anzuzeigen, dass mindestens zwei Cache-Zeilen zu löschen sind, und wobei der Satz von Caches mindestens einen Cache umfasst;
der Cache (111) dazu konfiguriert ist, das Löschpaket von dem Prozessorkern zu empfangen, wobei das Löschpaket verwendet wird, um anzuzeigen, dass die mindestens zwei Cache-Zeilen zu löschen sind;
der Cache (111) ferner dazu konfiguriert ist, eine Cache-Zeile, die sich in den mindestens zwei Cache-Zeilen, die durch das Löschpaket angezeigt werden, befindet und die sich innerhalb eines Verwaltungsbereichs des Cache befindet, zu löschen;
der Cache (111) ferner dazu konfiguriert ist, ein Löschabschlusspaket an den Prozessorkern zu senden; und
der Prozessorkern ferner dazu konfiguriert ist, Löschabschlusspakete von allen Caches in dem Satz von Caches zu empfangen;
wobei das Löschpaket verwendet wird, um anzuzeigen, dass die mindestens zwei Cache-Zeilen, die aufeinander folgen, zu löschen sind;
wobei das Löschpaket Informationen umfasst, die verwendet werden, um eine physikalische Adresse in einem Segment eines kontinuierlichen physikalischen Adressraums anzuzeigen, und die mindestens zwei Cache-Zeilen eine Cache-Zeile, in der sich eine physikalische Startadresse in dem Segment des kontinuierlichen physikalischen Adressraums befindet, und eine Cache-Zeile, in der sich eine physikalische Endadresse in dem Segment des kontinuierlichen physikalischen Adressraums befindet, umfassen; und
wobei der kontinuierliche physikalische Adressraum ein physikalischer Adressraum ist, der einem Hauptspeicher (120) zugeordnet ist, eine physikalische Adresse in einem zu löschenden kontinuierlichen physikalischen Adressraum mit einer physikalischen Adresse einer Cache-Zeile ausgerichtet ist und der zu löschende kontinuierliche physikalische Adressraum ein Raum ist, der anhand einer Cache-Zeilengröße gemessen wird.

7. Recheneinrichtung (100), umfassend einen Prozessor (110) nach Anspruch 6 und eine externe Einrichtung (130);
wobei die Recheneinrichtung (100) so konfiguriert ist, dass, wenn der Prozessorkern oder die externe Einrichtung (130) eine Gruppe von Computeranweisungen ausführt, das Verfahren nach einem der Ansprüche 1 bis 3 implementiert wird und, wenn der Cache (111) die Gruppe von Computeranweisungen ausführt, das Verfahren nach Anspruch 4 oder Anspruch 5 implementiert wird.

8. Prozessor (110) nach Anspruch 6, ferner umfassend einen Ring-/Maschenbus (116, 117), ein Verwaltungsmodul für externe Einrichtungen (114) und einen Speichermanager (113), wobei der Prozessorkern, der Cache (111), das Verwaltungsmodul für externe Einrichtungen (114) und der Speichermanager (113) unter Verwendung des Ring-/Maschenbusses (116/117) verbunden sind; und wobei der Prozessor (110) so konfiguriert ist, dass, wenn der Prozessorkern eine Gruppe von Computeranweisungen ausführt, das Verfahren nach einem der Ansprüche 1 bis 3 implementiert wird und, wenn der Cache (111) die Gruppe von Computeranweisungen ausführt, das Verfahren nach Anspruch 4 oder Anspruch 5 implementiert wird.

## Revendications

1. Procédé d'envoi de paquet de purge, comprenant :
l'envoi (S201), par un dispositif de requête, d'un paquet de purge à un ensemble de caches de manière diffusée, dans lequel les informations d'adresse physique transportées dans le paquet de purge sont utilisées pour indiquer de purger au moins deux lignes de cache, et l'ensemble de caches comprend au moins un cache ; et
la réception (S205), par le dispositif de requête, de paquets d'achèvement de purge en provenance de tous les caches dans l'ensemble de caches ;
dans lequel le paquet de purge est utilisé pour indiquer de purger les au moins deux lignes de cache qui sont consécutives ;
dans lequel le paquet de purge comprend des informations utilisées pour indiquer une adresse physique dans un segment d'espace d'adressage physique continu, et les au moins deux lignes de cache comprennent une ligne de cache dans laquelle se situe une adresse physique de début dans le segment d'espace d'adressage physique continu et une ligne de cache dans laquelle se situe une adresse physique de fin dans le segment d'espace d'adressage physique continu ; et
dans lequel l'espace d'adressage physique continu est un espace d'adressage physique mappé sur une mémoire principale, une adresse physique dans un espace d'adressage physique continu à purger est alignée avec une adresse physique d'une ligne de cache, et l'espace d'adressage physique continu à purger est un espace mesuré par une taille de ligne de cache.

2. Procédé selon la revendication 1, dans lequel :
les informations sur l'adresse physique dans le segment d'espace d'adressage physique continu comprennent une adresse physique de début d'une page, le paquet de purge comprend également un type de page, et le type de page est utilisé pour décrire une taille de la page ; ou
les informations sur l'adresse physique dans le segment d'espace d'adressage physique continu comprennent une adresse physique de début d'une page et une adresse physique de fin de la page ; ou
les informations sur l'adresse physique dans le segment d'espace d'adressage physique continu comprennent une adresse physique d'une ligne de cache dans au moins une page, le paquet de purge comprend également un type de page de chaque page, et le type de page est utilisé pour décrire une taille de la page ; ou
les informations sur l'adresse physique dans le segment d'espace d'adressage physique continu comprennent une adresse physique d'une ligne de cache et une quantité de lignes de cache ; ou
les informations sur l'adresse physique dans le segment d'espace d'adressage physique continu comprennent une adresse physique et une immédiate, et l'immédiate indique une quantité de bits de faible ordre dans l'adresse physique.

3. Procédé selon la revendication 1 ou 2, dans lequel le dispositif de requête comprend, sans s'y limiter, les dispositifs suivants : un cœur de processeur, un dispositif externe et un autre dispositif connecté à un bus.

4. Procédé de purge de cache, comprenant :
la réception (S202), par un cache, d'un paquet de purge provenant d'un dispositif de requête, dans lequel le paquet de purge est utilisé pour indiquer de purger au moins deux lignes de cache ;
la purge (S293), par le cache, d'une ligne de cache qui se trouve dans les au moins deux lignes de cache indiquées par le paquet de purge et qui se trouve dans une portée de gestion du cache ; et
l'envoi (S204), par le cache, d'un paquet d'achèvement de purge au dispositif de requête ;
dans lequel le paquet de purge est utilisé pour indiquer de purger les au moins deux lignes de cache qui sont consécutives ;
dans lequel le paquet de purge comprend des informations utilisées pour indiquer une adresse physique dans un segment d'espace d'adressage continu et les au moins deux lignes de cache comprennent une ligne de cache dans laquelle se situe une adresse physique de début dans le segment d'espace d'adressage physique continu, et une ligne de cache dans laquelle se situe une adresse physique de fin dans le segment d'espace d'adressage physique continu ; et
dans lequel l'espace d'adressage physique continu est un espace d'adressage physique mappé sur une mémoire principale, une adresse physique dans un espace d'adressage physique continu à purger est alignée avec une adresse physique d'une ligne de cache, et l'espace d'adressage physique continu à purger est un espace mesuré par une taille de ligne de cache.

5. Procédé selon la revendication 4, dans lequel toutes les lignes de cache purgées sur la base du paquet de purge sont stockées dans un ensemble de caches, l'ensemble de caches comprend au moins un cache, et le cache est n'importe quel cache dans l'ensemble de caches, et dans lequel le cache compris dans l'ensemble de caches appartient à un ou plusieurs nœuds NUMA d'accès mémoire non uniforme dans un système NUMA.

6. Processeur (110), comprenant au moins un cœur de processeur et au moins un cache (111), dans lequel
le cœur de processeur est configuré pour envoyer un paquet de purge à un ensemble de caches de manière diffusée, dans lequel les informations d'adresse physique transportées dans le paquet de purge sont utilisées pour indiquer de purger au moins deux lignes de cache, et l'ensemble de caches comprend au moins un cache ;
le cache (111) est configuré pour recevoir le paquet de purge en provenance du cœur de processeur, dans lequel le paquet de purge est utilisé pour indiquer de purger les au moins deux lignes de cache ;
le cache (111) est également configuré pour purger une ligne de cache qui se trouve dans les au moins deux lignes de cache indiquées par le paquet de purge et qui se trouve dans une portée de gestion du cache ;
le cache (111) est également configuré pour envoyer un paquet d'achèvement de purge au cœur de processeur ; et
le cœur de processeur est également configuré pour recevoir des paquets d'achèvement de purge en provenance de tous les caches de l'ensemble de caches ;
dans lequel le paquet de purge est utilisé pour indiquer de purger les au moins deux lignes de cache qui sont consécutives ;
dans lequel le paquet de purge comprend des informations utilisées pour indiquer une adresse physique dans un segment d'espace d'adressage continu et les au moins deux lignes de cache comprennent une ligne de cache dans laquelle se situe une adresse physique de début dans le segment d'espace d'adressage physique continu, et une ligne de cache dans laquelle se situe une adresse physique de fin dans le segment d'espace d'adressage physique continu ; et
dans lequel l'espace d'adressage physique continu est un espace d'adressage physique mappé sur une mémoire principale (120), une adresse physique dans un espace d'adressage physique continu à purger est alignée avec une adresse physique d'une ligne de cache, et l'espace d'adressage physique continu à purger est un espace mesuré par une taille de ligne de cache.

7. Dispositif informatique (100) comprenant un processeur (110) selon la revendication 6 et un dispositif externe (130) ;
dans lequel le dispositif informatique (100) est configuré de sorte que, lorsque le cœur de processeur ou le dispositif externe (130) exécute un groupe d'instructions informatiques, le procédé selon l'une quelconque des revendications 1 à 3 est mis en œuvre, et lorsque le cache (111) exécute le groupe d'instructions informatiques, le procédé selon la revendication 4 ou la revendication 5 est mis en œuvre.

8. Processeur (110) selon la revendication 6, comprenant également un bus en anneau/maille (116, 117), un module de gestion de dispositif externe (114) et un gestionnaire de mémoire (113), dans lequel le cœur de processeur, le cache (111), le module de gestion de dispositif externe (114) et le gestionnaire de mémoire (113) sont connectés en utilisant le bus en anneau/maille (116/117) ; et
dans lequel processeur (110) est configuré de sorte que, lorsque le cœur de processeur exécute un groupe d'instructions informatiques, le procédé selon l'une quelconque des revendications 1 à 3 est mis en œuvre, et lorsque le cache (111) exécute le groupe d'instructions informatiques, le procédé selon la revendication 4 ou la revendication 5 est mis en œuvre.
